# EUROPÄISCHE PATENTSCHRIFT

(11) **EP 0 362 513 B1**
(45) Veröffentlichungstag und Bekanntmachung des Hinweises auf die Patenterteilung: **04.05.1994**
(21) Anmeldenummer: 89114405.7
(22) Anmeldetag: 04.08.1989
(51) Int. Cl.: F02P 7/10, F16D 3/04

(54) **Zündverteiler für Brennkraftmaschinen**
Ignition distribution for combustion engines
Distributeur d'allumage pour moteurs à combustion

(30) Priorität: 10.09.1988 DE 3830900
(43) Veröffentlichungstag der Anmeldung: 11.04.1990
(73) Patentinhaber: ROBERT BOSCH GMBH, 70442 Stuttgart (DE)
(72) Erfinder: Brammer, Hartmut, D-7143 Vaihingen/Enz (DE); Jaki, Friedrich, D-7141 Erdmannshausen (DE)

(56) Entgegenhaltungen:
- DE-A- 2 232 723
- GB-A- 1 144 377
- US-A- 3 789 627
- US-A- 4 464 142

## Beschreibung

### Stand der Technik

Die Erfindung geht aus von einem Zündverteiler nach der Gattung des Hauptanspruchs. Es ist schon durch DE-OS 29 301 346 ein Zündverteiler bekannt, bei dem das Kuppeln der Verteilerwelle mit dem Antriebsorgan über eine Klauenkupplung erfolgt. Die Kupplungsteile werden dabei üblicherweise in Stahl ausgeführt. Dies macht erforderlich, daß die Kupplungsteile von Motoröl umgeben sein müssen, um Trockenlauf zu vermeiden und den Verschleiß und damit eine Verlagerung des Zündzeitpunkts zu unterdrücken. Weiterhin ist durch DE-OS 26 36 651 ein Zündverteiler bekannt, bei dem die an dem Antriebsorgan und der Verteilerwelle ausgebildeten Kupplungsteile mittels einem diese Teile kuppelnden Mitnehmer verbunden sind. Dieser Mitnehmer besteht aus elastischem Material. Durch dessen Nachgiebigkeit wird die Konstanz des Zündzeitpunkts infolge des im Mitnehmer auftretenden Verdrehwinkels bei Drehbelastung beeinträchtigt. Wegen der Dreigliedrigkeit der Klauenkupplung ist die Länge der Kupplung im Verhältnis zum restlichen Zündverteiler verhältnismäßig groß und der bauliche Aufwand gegenüber der eingangs beschriebenen konventionellen Lösung erhöht.

### Vorteile

Der erfindungsgemäße Zündverteiler mit den kennzeichnenden Merkmalen des Hauptanspruchs hat demgegenüber den Vorteil, daß die Kupplungsteile trocken laufen können, auf eine Ölschmierung verzichtet werden kann und somit auch keine Abhängigkeit von der Motorölversorgung besteht. Als weitere Vorteile sind anzusehen: verbesserte Laufeigenschaften der Kupplung und damit eine gesteigerte Dauerhaltbarkeit der Kupplungselemente, eine niedrigere Kupplungstemperatur durch die verminderte innere Reibung, eine Funktionsverbesserung durch eine geringere Veränderung des Zündzeitpunkts, eine verminderte Geräuschentwicklung sowie infolge des nicht mehr benötigten Mitnehmers ein günstigeres Fertigungsverfahren.
Durch die in den Unteransprüchen aufgeführten Maßnahmen sind vorteilhafte Weiterbildungen und Verbesserungen des im Hauptanspruchs angegebenen Zündverteilers möglich. Dabei sind die an den Kraftübertragungsstellen der Klauenkupplung einer hohen mechanischen Beanspruchung unterworfenen Partien durch in den Trägerstoff fixierte, qualitativ hochwertige Einsatzteile dargestellt und eine die Aspekte Betriebssicherheit und Kostenaufwand günstig verknüpfende Lösung gefunden.

### Zeichnung

Die Erfindung ist in der Zeichnung anhand mehrerer Figuren dargestellt und in der nachfolgenden Beschreibung näher erläutert. Es zeigen Figur 1 einen partiellen Längsschnitt durch einen Zündverteiler gemäß dem Stand der Technik, Figur 2 eine vom Stand der Technik abweichende, schematisch dargestellte Anordnung der Kupplung zwischen Antriebswelle und Verteilerwelle, Figur 3 ein mit der Verteilerwelle verbundenes erstes erfindungsgemäßes Kupplungsteil, welches ganz aus einem formstabilen und verschleißfesten Kunststoff besteht, Figur 4 ein abgewandeltes, erstes Kupplungsteil mit einem scheibenförmigen Grundkörper aus einem formstabilen gefüllten Kunststoff und innerhalb der Scheibe liegenden geschlossenen Kammern aus formstabilem und verschleißfestem Kunststoff, Figur 5 eine dritte Ausführung des ersten Kupplungsteils mit scheibenförmigem Grundkörper aus Metall und nutförmige Durchbrüche bildende Auskleidungen aus formstabilem und verschleißfestem Kunststoff.

### Beschreibung der Ausführungsbeispiele

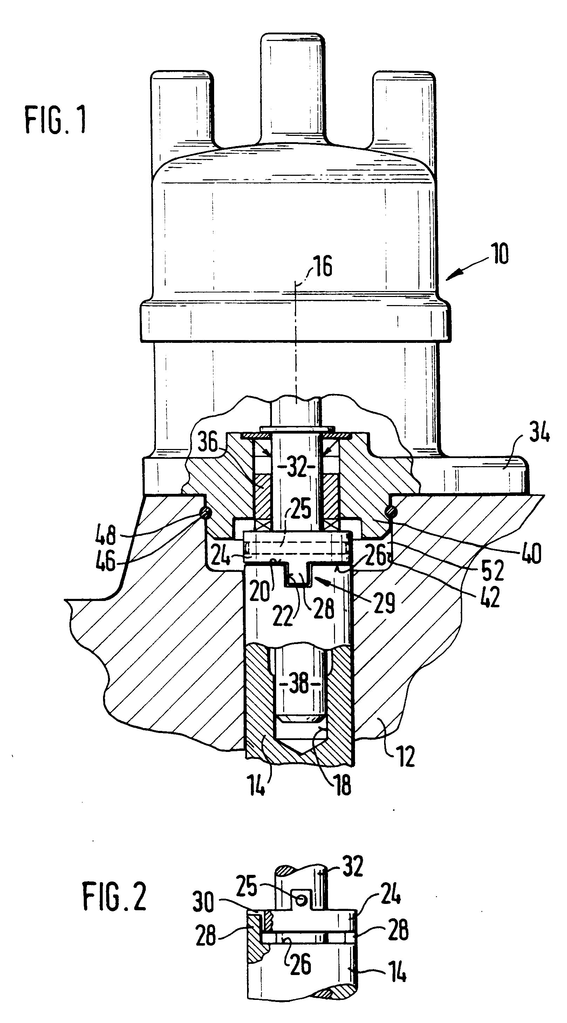

In Figur 1 ist, dem Stand der Technik entsprechend, in schematischer Darstellung ein Teilschnitt durch einen Zündverteiler 10 und seine Anordnung auf einem Motorblock 12 einer nicht weiter dargestellten Brennkraftmaschine gezeigt. In dem Motorblock 12 ist als Antriebsorgan eine Antriebswelle 14 gelagert. Sie trägt in ihrem dem Zündverteiler 10 zugewandten Ende eine zu ihrer Achse 16 koaxial angeordnete Einstecköffnung 18 und bildet auf ihrer Stirnseite einen zweiten Kupplungsteil 20 mit einer ersten Nut 22, die die Stirnseite der Antriebswelle 14 diagonal schneidet. In die erste Nut 22 greift ein erster Kupplungsteil 24 mit aus seiner Stirnfläche 26 herausragenden, diagonal verlaufenden Klauen 28 ein. Der erste Kupplungsteil 24 ist über ein Verbindungselement 25, hier in Form eines Mitnehmerstiftes, drehfest mit einer koaxial zur Achse 16 angeordneten Verteilerwelle 32 verbunden. In einem Flansch 34 des Zündverteilers 10 ist ein Lager 36 angeordnet, in welchem die Verteilerwelle 32 gelagert ist. Ein Endabschnitt 38 der Verteilerwelle 32 ist in der Einstecköffnung 18 zentriert. Der Flansch 34 greift mit einem Bund 40 in eine, den ersten Kupplungsteil 24 kreisförmig umgebende Ausnehmung 42 des Motorblocks 12 ein. Umfangsseitig weist der Bund 40 eine Nut 46 auf, in die ein Dichtungsring 48 eingelegt ist. Die vom Flansch 34 nicht ausgefüllte Ausnehmung 42 bildet einen Arbeitsraum 52.

Die zuvor beschriebene Einrichtung hat folgende Funktions- und Wirkungsvorgaben: das zum Betreiben des Zündverteilers 10 benötigte Drehmoment wird von der Antriebswelle 14 auf den an dieser ausgebildeten zweiten Kupplungsteil 20 übertragen. Der zweite Kupplungsteil 20 und der erste Kupplungsteil 24 in Verbindung mit der Verdrehsicherung durch das Verbindungselement 25 ergeben in ihrem funktionalen Zusammenwirken eine Klauenkupplung 29, so daß das Drehmoment zur Verteilerwelle 32 gelangt, die den nicht weiter detaillierten Zündverteiler 10 betreibt. Die Klauenkupplung 29 wird üblicherweise aus Stahl gefertigt. Dies bedingt einen die Kupplung teilweise umgebenden ölgefüllten Arbeitsraum 52, über den die Schmierung der Kupplungsteile der Klauenkupplung 29 erfolgt. Der Dichtungsring 48 schließt den Arbeitsraum 52 nach außen dicht ab.

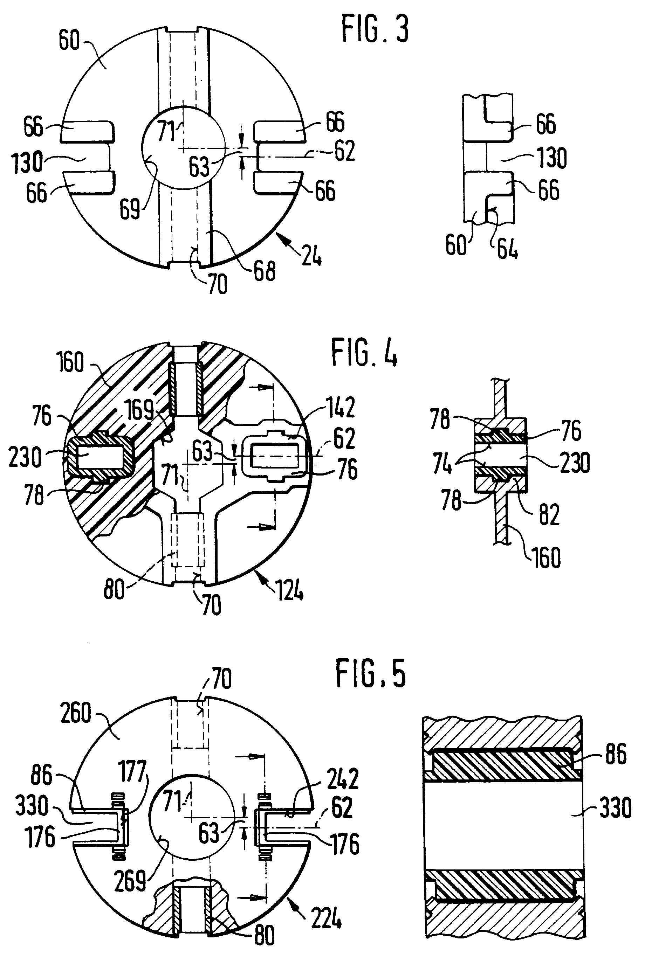

In Abwandlung des Stand der Technik zeigen die nachfolgend beschriebenen Ausführungsbeispiele den in Figur 2 schematisch dargestellten Aufbau der Klauenkupplung 29, wobei diese Beschreibung nur auf die prinzipielle Darstellung eingeht. Die Antriebswelle 14/Verteilerwelle 32 bildet hierbei an ihrem, der Verteilerwelle 32/Antriebswelle 14 zugewandten Ende selbst den zweiten Kupplungsteil 20 mit der Stirnfläche 26 und sich daraus erhebenden Klauen 28, die, in ihrer Form angepaßt und um ein Fügespiel kleiner ausgeführt, in axial gegenüberliegende Ausnehmungen 30 im ersten Kupplungsteil 24, das mit dem Verbindungselement 25, z. B. mit einem Querstift drehfest auf der Verteilerwelle 32/Antriebswelle 14 befestigt ist, greifen und hier eine formschlüssige Verbindung bilden, die eine Momentenübertragung zwischen Antriebswelle 14 und Verteilerwelle 32 ermöglicht. Dies zugrundelegend, detaillieren Figur 3 bis 5 den ersten Kupplungsteil 24 der Klauenkupplung 29 in vom Stand der Technik abweichenden Ausführungen.

Der in Figur 3 dargestellte erste Kupplungsteil 24 weist einen Grundkörper in Form einer Scheibe 60 auf mit parallel zu einem Durchmesser der Scheibe 60 liegenden, von einer Stirnseite 64 der Scheibe 60 hervorstehenden Begrenzungsteilen 66, die zwei Ausnehmungen 130 in der Scheibe 60 in Umfangsrichtung begrenzen. Die den Ausnehmungen 130 gemeinsame Mittellinie 62 ist zum Durchmesser um einen Abstand 63 versetzt. Die Begrenzungsteile 66, die der Kraftübertragung und der Minderung der Flächenpressung dienen, sind rechtwinklig sich aus der Scheibe erhebende Backen mit rechteckförmiger Querschnittsfläche. Die Erstreckung der Begrenzungsteile 66 vom Scheibenrand ins Scheibeninnere richtet sich nach der Tiefe der Ausnehmungen 130 und der Breite der Klauen 28. Sie beträgt in der Regel die Hälfte bis ein Drittel des Scheibenradiuses. Die Stirnseite 64 der Scheibe 60 trägt etwa mit gleichem Höhenmaß wie die Begrenzungsteile 66 eine Rippe 68, deren Mittellinie 71 ein senkrecht zu der Mittellinie 62 der Ausnehmungen 130 stehender Durchmesser ist. Die Rippe 68 wird durch eine axiale Bohrung 69 unterbrochen, die zur mit Spiel versehenen Aufnahme der Verteilerwelle 32 oder der Antriebswelle 14 dient, je nach Anordnung des zweiten Kupplungsteils 20 an der Antriebswelle 14 oder der Verteilerwelle 32. Die Rippe 68 weist entlang ihrer Längserstreckung eine durch ihren Kern verlaufende Längsbohrung 70 auf, die als Durchgangsbohrung ausgeführt ist und der Aufnahme des Mitnehmerstiftes 25 dient, über den das erste Kupplungsteil 24 mit der Verteilerwelle 32 oder der Antriebswelle 14 gekoppelt wird.

Figur 4 zeigt ein abgewandeltes erstes Kupplungsteil 124 als Grundkörper in Form einer Scheibe 160 mit innerhalb der Scheibe 160 liegenden Ausnehmungen 142. In diese sind Auskleidungen 76 eingesetzt, die Ausnehmungen in Form von Durchbrüchen 230 aufweisen. Der Querschnitt der Durchbrüche 230 entspricht dem um ein Fügespiel vergrößernden Querschnitt der Klauen 28. Bei dem dargestellten Ausführungsbeispiel haben die Durchbrüche 230 rechteckigen Querschnitt; ihre gemeinsame Mittellinie 62 ist vom dazu parallelen Durchmesser um einen Abstand 63 versetzt. Die Durchbrüche 230 werden gebildet von Auskleidungen 76, die im wesentlichen konstante Wandstärke haben, ausgenommen von Absätzen 78, von denen hier je zwei in der Mitte der in Umfangsrichtung weisenden Begrenzungsflächen 74 der Auskleidungen 76 von den Durchbrüchen 230 wegweisen. Die Auskleidungen 76 sind in der Scheibe 160 starr eingefügt. Rechtwinklig zur Mittellinie 62 verläuft, auf einem Durchmesser liegend, die als Durchgangsbohrung ausgebildete Bohrung 70 zur Aufnahme des Mitnehmerstiftes 25, unterbrochen durch eine axiale Durchtrittsöffnung 169 in der Scheibe 160. Die Bohrung 70 wird im Bereich ihrer Endlagen über die Bohrung 70 einengenden rohrförmigen Hohlkörper 80 verstärkt. Die Scheibe 160 trägt im Bereich der Auskleidungen 76 und der Bohrung 70 diese umfassende Verstärkungen 82.

Ein drittes Ausführungsbeispiel des ersten Kupplungsteils 224 zeigt Figur 5. Der Grundkörper des ersten Kupplungsteils 224 weist auch hier die Form einer Scheibe 260, jedoch mit konstanter Dicke, auf, mit als vom Scheibenrand ausgehende nutförmige Ausnehmungen 242 mit einer gemeinsamen Mittellinie 62. Diese ist vom dazu parallelen Durchmesser wieder um den Abstand 63 versetzt. In diese Ausnehmungen 242 sind Auskleidungen 86 eingesetzt, die Ausnehmungen in Form von, einen rechteckigen Querschnittsverlauf einnehmenden Durchbrüchen 330 aufweisen. Die Durchbrüche 330 sind zur Scheibe 260 hin umfaßt von den Auskleidungen 86, die im wesentlichen konstante Wandstärke haben bis auf den Boden 176 gegenüber dem Nutgrund 177, der stärker ausgeführt ist. Die Auskleidungen 86 sind mit der Scheibe 260 formschlüssig verbunden. Rechtwinklig zur Mittellinie 62 verläuft, auf einem Durchmesser liegend, die Bohrung 70. Sie ist wieder als, durch eine axiale Durchtrittsöffnung 269 unterbrochene Durchgangsbohrung 70 ausgebildet. Die Bohrung 70 wird im Bereich ihrer Endlagen wie bei der Ausführung nach Figur 4 über die die Bohrung 70 einengenden rohrförmigen Hohlkörper 80 verstärkt.

Die erfindungsgemäßen Ausführungen des ersten Kupplungsteils nach Figur 3 - 5 dienen dem Zweck, die Drehmomentübertragung zum Betrieb des Zündverteilers 10 auch ohne Zusatzschmierung zu ermoglichen und durch die Ausgestaltung des ersten Kupplungsteils noch weitere Funktionsverbesserungen zu erreichen.

Bei der ersten Konstruktionsvariante nach Figur 3 ist das erste Kupplungsteil 24 einheitlich aus formstabilem und verschleißfestem Kunststoff hergestellt. Die über die Stirnseite 64 der Scheibe 60 hervorstehenden Begrenzungsteile 66 vergrößern die für die Drehmomentübertragung benötigte Übertragungsfläche auf das erforderliche Maß. Die Bohrung 70 dient zur Aufnahme des Verbindungselements 25 für die Lage- und Verdrehsicherung des ersten Kupplungsteils 24 auf der Verteilerwelle 32/Antriebswelle 14. Der Abstand 63 zwischen der Mittellinie 62 und dem dazu parallelen Durchmesser vermittelt bei der Montage des Zündverteilers 10 auf den Motorblock 12 die vorbestimmte Drehlagepositionierung zu den einzelnen Zylindern der Brennkraftmaschine, damit die Auslösung des für die einzelnen Zylindern bestimmten Zündimpulse durch den Zündverteiler 10 in der richtigen Reihenfolge erfolgt.

Bei der zweiten Konstruktionsvariante nach Figur 4 ist die Scheibe 160 aus einem formstabilen Kunststoff, z. B. aus mit Glasfaser verstärktem Polyamid, hergestellt. Dieser Kunststoff weist nicht das erforderliche Gleitvermögen für den Einsatz in einer formschlüssigen Kupplung auf. Dies wird vermittelt durch die Auskleidungen 76, die hier aus formstabilem und verschleißfestem Kunststoff bestehen. Die Auskleidungen 76 werden als separate Bauteile gefertigt, in der Herstellungsform der Scheibe 160 positioniert und bei der Herstellung der Scheibe 160 im Kunststoffspritzverfahren mit umspritzt. Die Absätze 78 wirken als formschlüssige Lagesicherung der Auskleidungen 76 bei auf die Stirnseiten der Scheibe 160 gerichteten Kräfte. Die Bohrung 70 dient derselben Funktion wie bei der ersten Konstruktionsvariante nach Figur 3 beschrieben; sie ist über die beiden rohrförmigen Hohlkörper 80 verstärkt, um bei Relativbewegungen des Verbindungselements 25 in der Bohrung 70 dessen Verschleiß zu unterbinden. Die aus den Stirnseiten der Scheibe 160 herausragenden, die Auskleidungen 76 umgebenden Verstärkungen 82 stellen die für die Drehmomentübertragung zum Betrieb des Zundverteilers erforderlichen Übertragungsflächen dar.

Die dritte Konstruktionsvariante nach Figur 5 zeigt eine Scheibe 260, die aus Metall gefertigt ist und vom Scheibenrand gesehen nutenartige Ausnehmungen 242 aufweist, wobei an den beim Kupplungsvorgang beanspruchten Stellen der formstabile und verschleißfeste Kunststoff in diese Ausnehmung 242 als Auskleidungen 86 eingesetzt ist. Diese Auskleidungen 86, wiederum als separate Bauteile hergestellt, werden in vorgefertigte Ausnehmungen 242 der Scheibe 260 eingesetzt und bleibend fixiert. Die bleibende Fixierung kann, wie hier ausgeführt, durch Verstemmen erfolgen. Der in seiner Wandung verstärkte Boden 176 der Auskleidungen 86 nimmt dabei die auf ihn gerichteten Fixierkräfte auf. In die Bohrung 70 sind die rohrförmigen Hohlkörper 80 fixiert, beispielsweise durch eine Reibschlußverbindung. Die rohrförmigen Hohlkörper 80 nehmen das Verbindungselement 25 für die Lage- und Verdrehsicherung des ersten Kupplungsteils 224 auf der Verteilerwelle 32/Antriebswelle 14 auf.Der für die Scheibe 60 in der ersten Konstruktionsvariante nach Figur 3 und auch für die Auskleidungen 76 bzw. 86 in der zweiten und dritten Konstruktionsvariante nach Figur 4 und 5 verwendete formstabile und verschleißfeste Kunststoff, der diese Eigenschaften auch aufgrund seiner Selbstschmierfähigkeit und des damit verbundenen Trockenlaufvermögens aufweist, ist vorteilhaft ein Polyimid.

Der für die Scheibe 60 in der zweiten Konstruktionsvariante nach Figur 4 genannte formstabile gefüllte Grundstoff ist vorteilhaft ein Polyamid 6 mit 30 % Glasfaseranteil.

Die Scheibe 260, die in der dritten Konstruktionsvariante nach Figur 5 aus Metall hergestellt ist, kann aus verformungsfähigem und nicht zu Sprödbruch neigendem Stoff wie beispielsweise Aluminium gefertigt sein.

Mit den aufgeführten erfindungsgemäßen Weiterbildungen ist es insbesondere möglich, auf die Ölschmierung der Klauenkupplung 29 zu verzichten und die konstruktive Ausbildung einer gekapselten Schmierung einzusparen.

## Patentansprüche

1. Zündverteiler für Brennkraftmaschinen mit einer Verteilerwelle (32), die mit einem Antriebsorgan (14) über eine Klauenkupplung (29) gekuppelt ist, bestehend aus einem koaxial auf der Verteilerwelle (32) oder Antriebsorgan (14) angeordneten ersten Kupplungsteil (24), das auf der Verteilerwelle (32) oder Antriebsorgan (14) mittels eines Verbindungselements (25) fest montiert ist, mit einem am Antriebsorgan (14) oder an der Verteilerwelle (32) angeordneten zweiten Kupplungsteil (20), dadurch gekennzeichnet, daß an dem zweiten Kupplungsteil (20) die Klauen (28) der Klauenkupplung (29) angeformt sind, die in wenigstens einer Ausnehmung (30; 130; 230; 330) im ersten Kupplungsteil (24) formschlüssig eingreifen und die Ausnehmungen (30; 130; 230; 330) im Bereich des Klaueneingriffs aus formstabilem verschleißfestem Kunststoff mit Selbstschmiereigenschaften bestehen.

2. Zündverteiler nach Anspruch 1, dadurch gekennzeichnet, daß das erste Kupplungsteil (24) aus dem formstabilen und verschleißfesten Kunststoff besteht.

3. Zündverteiler nach Anspruch 2, dadurch gekennzeichnet, daß der erste Kupplungsteil (24) eine Scheibe (60) ist mit parallel zu einem ersten Durchmesser der Scheibe (60) liegenden, von der einen Stirnseite (64) der Scheibe (60) hervorstehenden Begrenzungsteilen (66), die die Ausnehmungen (130) in Umfangsrichtung begrenzen, mit einer Rippe (68), die senkrecht zum ersten Durchmesser verläuft und gleichgerichtet wie die Begrenzungsteile (66) aus der Stirnseite (64) der Scheibe (60) hervorsteht, eine durchgehende Längsbohrung (70) aufweist und in einer axialen Durchtrittsöffnung (69) der Scheibe (60) unterbrochen wird.

4. Zündverteiler nach Anspruch 3, dadurch gekennzeichnet, daß die Bohrung (70) das Verbindungselement (25) zur Lage- und Verdrehsicherung der Scheibe (60) auf der Verteilerwelle (32) aufnimmt.

5. Zündverteiler nach Anspruch 1, dadurch gekennzeichnet, daß der erste Kupplungsteil (124) eine Scheibe (160) ist mit auf einer parallel zu einem ersten Durchmesser der Scheibe liegenden Mittellinie liegenden Ausnehmungen (142), mit einer entlang eines zweiten Durchmessers der Scheibe 160 verlaufenden Bohrung (70), wobei die Mittellinie (62) und der zweite Durchmesser zueinander senkrecht stehen, die Bohrung (70) rohrförmige Hohlkörper (80) und die Ausnehmungen (142) eine Auskleidung (76) jeweils aus formstabilem verschleißfestem Kunststoff aufweist, wobei die Scheibe (160) im Bereich der Bohrung (70) und der Auskleidung (76) verstärkt ist.

6. Zündverteiler nach Anspruch 5, dadurch gekennzeichnet, daß die Auskleidungen (76) Durchbrüche (230) aufweisen.

7. Zündverteiler nach Anspruch 5 oder 6, dadurch gekennzeichnet, daß die Scheibe (60) aus Polyamid 6 mit Glasfaserverstärkung besteht.

8. Zündverteiler nach Anspruch 1, dadurch gekennzeichnet, daß das erste Kupplungsteil (224) eine Scheibe (260) aus Metall ist und die Ausnehmungen (242) mit formstabilem und verschleißfestem Kunststoff ausgekleidet sind.

9. Zündverteiler nach Anspruch 8, dadurch gekennzeichnet, daß die Scheibe (260) zwei auf einer zu einem ersten Durchmesser der Scheibe (260) parallelen Mittellinie (62) liegende nutförmige Ausnehmungen (242) aufweist und eine entlang eines zweiten Durchmessers verlaufende Bohrung (70), wobei die Mittellinie (62) und der zweite Durchmesser zueinander senkrecht stehen und in Ausnehmungen (242) der Scheibe (260) Auskleidungen (86) eingesetzt sind, die Durchbrüche (330) aufweisen.

10. Zündverteiler nach Anspruch 8 oder 9, dadurch gekennzeichnet, daß die Scheibe (260) aus Aluminium besteht.

11. Zündverteiler nach einem der vorstehenden Ansprüche, dadurch gekennzeichnet, daß der formstabile verschleißfeste Kunststoff ein Polyimid ist.

## Claims

1. Ignition distributor for internal combustion engines, with a distributor shaft (32) which is coupled to a driving member (14) via a dog coupling (29) consisting of a first coupling part (24) which is arranged coaxially on the distributor shaft (32) or driving member (14) and is mounted in a fixed manner, by means of a connecting element (25), on the distributor shaft (32) or driving member (14), with a second coupling part (20) arranged on the driving member (14) or on the distributor shaft (32), characterized in that the dogs (28) of the dog coupling (29) are integrally formed on the second coupling part (20), these dogs engaging positively in at least one slot (30; 130; 230; 330) in the first coupling part (24) and the slots (30; 130; 230; 330) being composed in the region of dog engagement of dimensionally stable, wear-resistant plastic with self-lubricating properties.

2. Ignition distributor according to Claim 1, characterized in that the first coupling part (24) is composed of the dimensionally stable and wear-resistant plastic.

3. Ignition distributor according to Claim 2, characterized in that the first coupling part (24) is a disc (60) with delimiting parts (66) which lie parallel to a first diameter of the disc (60), project from one face (64) of the disc (60) and delimit the slots (130) in the circumferential direction, with a rib (68) which extends perpendicular to the first diameter and projects in the same direction as the delimiting parts (66) from the face (64) of the disc (60), has a longitudinal through hole (70) and is interrupted by an axial passage opening (69) in the disc (60).

4. Ignition distributor according to Claim 3, characterized in that the hole (70) receives the connecting element (25) for securing the disc (60) in position and against rotation on the distributor shaft (32).

5. Ignition distributor according to Claim 1, characterized in that the first coupling part (124) is a disc (160) with slots (142) lying on a centre line lying parallel to a first diameter of the disc, with a hole (70) extending along a second diameter of the disc (160), the centre line (62) and the second diameter lying perpendicular to one another, the hole (70) has tubular hollow bodies (80) and the slots (142) have a lining (76), in each case made of dimensionally stable, wear-resistant plastic, the disc (160) being reinforced in the region of the hole (70) and of the lining (76).

6. Ignition distributor according to Claim 5, characterized in that the linings (76) have openings (230).

7. Ignition distributor according to Claim 5 or 6, characterized in that the disc (60) is composed of nylon 6 with glass fibre reinforcement.

8. Ignition distributor according to Claim 1, characterized in that the first coupling part (224) is a disc (260) made of metal and the slots (242) are lined with dimensionally stable and wear-resistant plastic.

9. Ignition distributor according to Claim 8, characterized in that the disc (260) has two groove-like slots (242), the said slots lying on a centre line (62) parallel to a first diameter of the disc (260), and a hole (70) extending along a second diameter, the centre line (62) and the second diameter lying perpendicular to one another and linings (86) which have openings (330) being inserted in slots (242) of the disc (260).

10. Ignition distributor according to Claim 8 or 9, characterized in that the disc (260) is composed of aluminium.

11. Ignition distributor according to one of the preceding claims, characterized in that the dimensionally stable, wear-resistant plastic is a polyimide.

## Revendications

1. Distributeur d'allumage de moteurs à combustion interne, comprenant un arbre de distributeur (32) relié à un organe d'entraînement (14) par un accouplement à griffes (29), constitué d'une première partie (24) montée coaxialement sur l'arbre (32) ou sur l'organe (14) avec fixation par l'intermédiaire d'un élément de liaison (25), d'une seconde partie (20) montée sur l'organe (14) ou sur l'arbre (20), caractérisé en ce que la deuxième partie (20) de l'accouplement est porteuse de griffes (28) assurant l'accouplement, en étant en prise, par interpénétration par la forme, dans au moins une encoche (30; 130; 230; 330) de la première partie (24) de l'accouplement, les encoches (30; 130; 230; 330), au niveau de leurs surfaces en prise avec les griffes, étant faites d'une matière plastique résistant à la déformation et possédant des propriétés d'auto-lubrification.

2. Distributeur d'allumage selon la revendication 1, caractérisé en ce que la première partie (24) de l'accouplement est faite d'une matière plastique résistant à la déformation et à l'usure.

3. Distributeur d'allumage selon la revendication 2, caractérisé en ce que la première partie (24) de l'accouplement est un disque (60) portant, parallèlement à un de ses diamètres, des bordures (66) en relief par rapport à une face (64) du disque (60) ainsi qu'une nervure perpendiculaire au diamètre précédent, présentant le même relief par rapport à la face (64) que les bordures (66) et traverse par un perçage longitudinal (70) interrompu par une ouverture (62) traversant axialement le disque.

4. Distributeur d'allumage selon la revendication 3, caractérisé en ce que le perçage (70) sert de logement à l'élément de liaison (25) assurant le positionnement et le blocage à rotation du disque (60) sur l'arbre du distributeur (32).

5. Distributeur d'allumage selon la revendication 1, caractérisé en ce que la première partie (124) de l'accouplement est un disque (160) présentant des cavités (142) dont la ligne médiane est parallèle à un premier diamètre du disque, ainsi qu'un perçage disposé selon un deuxième diamètre du disque, perpendiculaire à la ligne médiane précédente, ce perçage (70) contenant des douilles tubulaires creuses (80), tandis que les cavités (142) sont équipées chacune d'une garniture faite d'une matière plastique résistant à la déformation et à l'usure, le disque (160) étant renforcé au niveau du perçage (70) et de la garniture (76).

6. Distributeur d'allumage selon la revendication 5, caractérisé en ce que les garnitures (76) sont percées de passages (230).

7. Distributeur d'allumage selon la revendication 5 ou 6, caractérisé en ce que le disque (60) est réalisé en polyamide renforcée par des fibres de verre.

8. Distributeur d'allumage selon la revendication 1, caractérisé en ce que la première partie (224) de l'accouplement est un disque (260) en métal dont les cavités (242) sont garnies d'une matière plastique résistant à la déformation et à l'usure.

9. Distributeur d'allumage selon la revendication 8, caractérisé en ce que le disque (260) présente deux cavités (242) en forme de rainures dont la ligne médiane (62) est parallèle à un premier diamètre du disque (260) ainsi qu'un perçage (70) disposé selon un second diamètre du disque perpendiculaire à la ligne médiane (62) précédente, les cavités (242) du disque (260) étant équipées de garnitures (86), percées d'ouvertures (330).

10. Distributeur d'allumage selon la revendication 8 ou 9, caractérisé en ce que le disque (260) est en aluminium.

11. Distributeur d'allumage selon l'une quelconque des revendications précédentes, caractérisé en ce que la matière plastique résistante à la déformation et à l'usure est un polyimide.
